# EUROPEAN PATENT APPLICATION

(11) **EP 3 486 276 A1**
(43) Date of publication of application: **22.05.2019**
(21) Application number: 18207235.5
(22) Date of filing: 20.11.2018
(51) Int. Cl.: C08J 9/00, C08J 9/224, E04C 2/20, E04B 1/94, C09K 21/04, C09K 21/14, C08J 9/36

(54) **EPS AND EPS DERIVED MATERIALS CONTAINING A HALOGEN-FREE FLAME RETARDANT COATING**

(30) Priority: 21.11.2017 DK PA201770874
(71) Applicant: Haugaard Management ApS, 6000 Kolding (DK)
(72) Inventor: Haugaard, Jens, 6000 Kolding (DK); Rødtnes, Henrik, 7000 Fredericia (DK)
(74) Representative: Tellefsen, Jens J.

(57) **Abstract**

Method of fire protecting an expanded polystyrene (EPS) material, the method comprising providing the EPS with a two layer structure applying a bromine-free fire inhibiting agent or a bromine-free fire protecting agent layer to the EPS, where the compound constituting the fire protection layer comprises above 8% by weight of a composition comprising N- and P- components thereafter applying a second layer comprising a protective polymer.

## Description

### Field of the Invention

The invention is directed at a method for fire protecting an expanded polystyrene material (EPS) or and EPS derived material as well as a layer by layer coating, said coating having a first layer having a high content of N- and P-salts, and the second layer being a protective layer.

### Background of the Invention

Within this application reference is made to EPS material. This shall be understood as all materials derived from expanded polystyrene materials and similar types of materials.

Expanded polystyrene is widely used. In particular, in the construction industry for insulation purposes, EPS is a very common material. However, one of the major drawbacks of using EPS materials is the fact that in case of fire they will burn. During a fire dangerous fumes and noxious gases are generated and pollute the ambient environment. Consequently, the building codes will traditionally require that polystyrene is protected from fire such that in case of fire the risk of the EPS materials igniting and burning is reduced. One way of doing this is to dope the EPS materials with a bromine-containing fire retardant. Alternatively, the use of EPS is limited to constructions where the hazard is minimised such as for example under floors and the like.

In US 2003/0220408 an expanded polystyrene product having fire retardant properties is manufactured, by introducing halogenated flame retardants during the process.

In this context bromine shall be understood as organobromine compounds traditionally used as fire retardants. A disadvantage of using bromine containing fire retardants is the fact that sunlight can convert volatile organobromine compounds to free bromine atoms in the atmosphere which causes ozone depletion and therefore bromine is very harmful to the environment and as such it is desirable to avoid the use of bromine compounds. Furthermore the evaporation of gasses particularly the immediate gas and/or fume development in case of a fire is a severe health hazard. The evaporation of gasses over time from these types of fire inhibitors is furthermore suspected of causing disturbances in the hormonal system.

Expandable polystyrene (EPS) is produced in a suspension process by adding a blowing agent, usually pentane, which causes resin to foam during moulding. Styrene beads containing/encapsulating a small amount of pentane are exposed to heating - usually by introducing steam into a reaction chamber. During the heating the pentane and styrene expands and polymerization occurs. The process may be performed as a single step or a two step process.

The two step process passes the blowing agent though the polystyrene beads during, or after, polymerisation. The resulting beads are then subjected to steam heating to above their glass transition temperature resulting in the beads expanding (by 40 to 80 times) and produce the cellular form. The resulting product is then moulded or otherwise shaped.

### Object of the Invention

It is, however, desirable to use EPS materials as insulation as the energy needed for manufacturing comparable insulation values of EPS, compared to for example glass wool, mineral wool or wood or hemp fiber insulation is substantially less - see table below (source : EUMEPS European Manufacturers of EPS | Weertersteenweg 158 | 3680 Maaseik | BELGIUM | info@eumeps.org | www.eumeps.org. Values in MJ, January 2018).

| | | |
|---|---|---|
| **EPS grey** | **44,10** | EPD-EUM-20160273-IBG1-EN |
| **EPS white** | **49,65** | EPD-EUM-20160269-IBG1-EN |
| **Mineral foam** | **74,75** | EPD-XEL-20140218-CAD1-DE |
| **Mineral wool (MW)** | **84,50** | EPD-DRW-20120113-IBC2-EN |
| **Hemp fibre** | **115,15** | baubook-No. 9224 aa |
| **Wood fibre** | **310,06** | PAV-2013254-CBG2-EN |

As is clear the environmental impact from the manufacturing step is substantially less than for other types of insulation. Furthermore EPS may be regenerated and used as raw material for other plastic moulding processes. Consequently it is an object of the present invention to improve particularly the fire-inhibiting properties of EPS thereby facilitating more widespread use of this material, and at the same time reduce or eliminate any environmental impact during use and also when the EPS is exposed to fire.

### Description of the Invention

The invention provides a bromine-free fire inhibiting agent or a bromine-free fire protecting agent, which is friendly to the environment and yet very effective. Some of the more serious problems relating to the use of Bromine as a fire retardant are outlined above. By not using Bromine it is clear that the associated drawbacks are eliminated.

Furthermore reference is made to both "fire inhibiting" and "fire protecting". This shall be understood as by introducing the agent into the outer layer of an ESP material or onto the surface of an EPS material fire inhibiting or protecting properties are obtained. The degree to which the EPS becomes resistant against the influence of fire, i.e. being categorised as inhibiting or protecting, depends on a number of factors. National codes relating to categorizing materials varies. The amount of powder applied per area unit to the EPS also affects the fire retardancy, as does the concentration of fire retardant (N- and P-salts).

Internationally there is a desire to ban all bromine (halon) containing fire inhibiting agents as they are environmentally very harmful and poisonous. However, due to the lack of adequate replacements, these agents are still being used.

The invention addresses these needs and provides other advantages by manufacturing EPS products by a method where the fire inhibiting properties are integrated in each EPS bead, where the method of fire protecting an expanded polystyrene (EPS) material or derived products, comprising providing the expanded polystyrene material with a content of a bromine-free fire inhibiting agent or a bromine-free fire protecting agent where the agent constituting the fire protection layer comprises above 8% by weight of a composition comprising N- and P- components derived from an acid-base reaction, and where the fire inhibiting agent is added during the polystyrene expansion process as a finely ground powder having a particle size between 0,5 to 60 µm, preferably with a mean average size of between 10 and 20 µm.

Within the invention the fire protection is provided and described as a content of a bromine-free fire inhibiting agent or a bromine-free fire protecting agent where the bromine-free fire inhibiting agent or a bromine-free fire protecting agent constitutes the fire protection layer. However in the description reference may be made to "fire inhibiting agent" or "fire protection material". It is to be understood that what is meant is the bromine-free fire inhibiting agent or bromine-free fire protecting agent with the characteristics described.

In this manner a very effective fire protected EPS material is provided according to a first aspect of the invention where a method of fire protecting a material, the method comprising providing the material with a two layer structure, applying a bromine-free fire inhibiting agent or a bromine-free fire protecting agent layer to the material, where the compound constituting the fire protection layer comprises above 8% by weight of a composition comprising N- and P- components derived from an acid-base reaction, and thereafter applying a second layer comprising a protective polymer layer.

The fire inhibiting agent is obtained by an acid-base reaction with a high content of N- and P-components, mainly salts. Although N- and P- salts may be derived in other manners, the acid-base reaction provides a very high yield of suitable salts. By providing a two layer structure i.e. first a base layer comprising the fire inhibiting agent and thereafter covering the first layer with a second layer, a very homogenous and effective fire protecting layer is applied to the EPS.

One of the challenges when developing the present invention was to make the EPS "accept and integrate" the bromine-free fire inhibiting agent or a bromine-free fire protecting agent. By grinding the bromine-free fire inhibiting agent or a bromine-free fire protecting agent to a very fine powder and introducing the coating of the EPS material during the manufacturing process of the EPS, it was found that the introduction of the bromine-free fire inhibiting agent or a bromine-free fire protecting agent in powder form did not affect the manufacturing process significantly. This is important from a commercial point of view, as the process/method may be carried out on existing installations/manufacturing equipment with only slight modifications.

In a further aspect of the method according to the invention the EPS is coated in a fluid bed process, such that the EPS objects to be coated are introduced into a fluid bed installation wherein first the material constituting the fire protecting layer is introduced into the fluidized bed installation coating the EPS objects, and secondly the objects having a first layer is subjected to a second coating by a material comprising a protective polymer forming a second layer. In a fluid bed process the uncoated EPS material is fluidized and at the same time the fire inhibiting agent is sprayed into the fluidized bed of EPS material such that as the EPS materials are agitated in the airstream containing the fire inhibiting agent an effective coating of the EPS material is achieved. After having been coated with the fire inhibiting agent, the second layer is applied where the second layer comprises a polymer. The second coating may also be applied by a fluidized bed process as a separate method step.

As an alternative to the coating process by means of a fluidized bed installation the EPS objects are introduced into and passed through a first bath containing the fire inhibiting agent or the fire protecting agent material in fluid form, thereafter transferred to a second bath containing the material including a polymer, such that as the objects have passed both baths a two layer structure is provided covering the EPS object. An EPS material is very light and it will flow on the top of the water and it is therefore necessary to provide some means ensuring that the entire surface of the EPS is wetted and coated by the fire inhibiting agent.

In a still further advantageous embodiment of the invention the EPS objects are in one of the following shapes:
a. granular form
b. balls or spheres
c. blocks

In the context of the present invention the expression "mean diameter" shall be understood as the Sauter mean diameter which is a well-established measurement for an average of particle size. It is defined as the diameter of a sphere that has the same volume/surface area ratio as a particle of interest. There are several methods to obtain a good estimate of the Sauter mean diameter. When fibers are being mentioned it is the average diameter or cross measure of the fiber orthogonal to the fibers longitudinal extend which is meant.

Within the context of the present invention:
- granular shall be understood as small pieces or particles of material. Typical sizes for use with the present invention are particles having mean diameters between 0.5 mm and 25 mm;
- balls or spheres is to be understood as more or less round bodies or masses. Typical sizes for use with the present invention are balls or spheres having a mean diameter between 0.2 mm and 25 mm;
- blocks shall be understood as larger pieces of any shape, typically having volumes between 1 cm3 up to 1 m3.

In a further advantageous method step according to the invention, the thickness of the first layer is between 2µm and 300µm and the thickness of the second layer is between 1µm and 200µm. Tests have indicated that although these layer thicknesses are relatively thin, a very effective coating is achieved with high fire protecting qualities.

Furthermore, with the fluid bed method or spray application method as already described above it is possible to control the layer thickness and the coating properties very precisely such that an even coating, i.e. a coating covering the entire surface of the EPS material as well as an even layer thickness may be achieved.

In a still further advantageous embodiment of the method glycerin is added to the fire protecting compound. It turns out that the glycerin layer during fire tests provides/creates a carbon protective layer when exposed to fire thus improving the fire protecting properties of the entire coating.

The polymer coating used as the outer layer may for example be a biopolymer such as polyactic acid, shellac or a chitosan. Although some polymer solutions appear to improve the overall fire protecting properties when applied properly, the process of using some of the biopolymers are more difficult due to the low solubility of that particular polymer in the preferred solvent.

For example for chitosan the preferred solvent was an acidic acid. With shellac a very good coating was achieved due to the high solubility of the shellac in its solvent where the shellac was dissolved in alcohol.

Chitosan is a linear polysaccharide composed of randomly distributed glucosamine. Chitosan is furthermore more widely used industrially and as such the documented properties of chitosan are well proven and non-dangerous and non-harmful, particularly in the environment in which it is used with the present invention.

Shellac is resin secreted by the female lac bug particularly processed and produced in India and Thailand. There are various artificial shellac-like compounds, which may demonstrate similar properties as the naturally derivable shellac. However, with the testing of the present invention the naturally occurring shellac was used but it is contemplated that also the artificially derived shellacs will be useful for the purpose of the present invention.

In an advantageous embodiment of the invention the fire inhibiting or fire protecting layer is in the shape of granules, and where each granule is provided with the second layer of protective polymer, and where the density of granules on the surface of the material to be fire protected is such that the granules covers a substantial portion of the surface of the material to be protected.

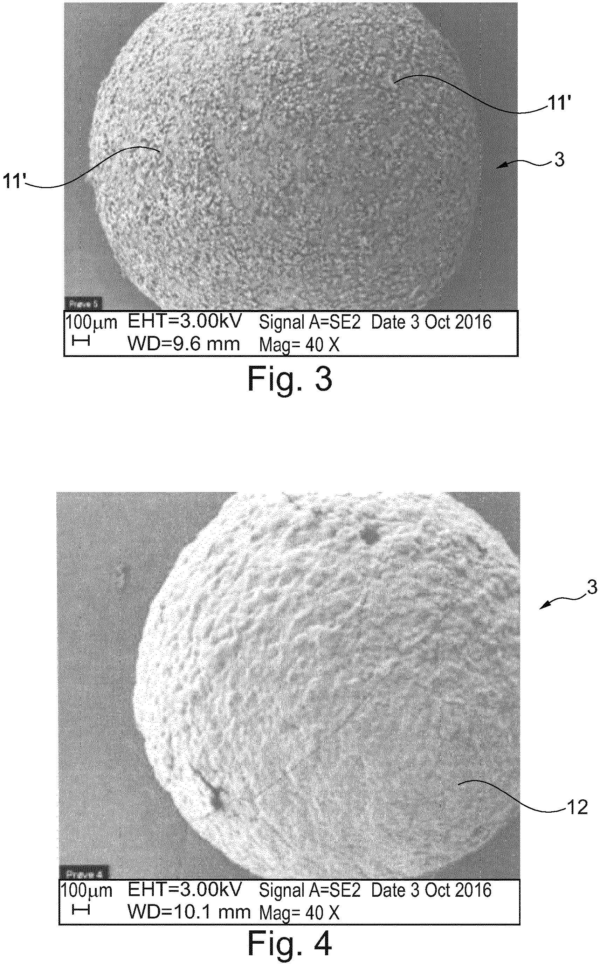

As shown in fig. 3 (further explanation below) it is possible to cover a substantial part of the surface of an EPS granule with tiny granules - each tiny granule having a layered structure. By coating the surface of the EPS material such that a substantial portion of the surface is covered an effective fire protection is achieved. In this context substantial portion is to be understood as 90% or more, preferably 95% or more of the surface is covered by the tiny granules according to this embodiment.

For the purpose of the present invention the geometrical shape and sizes of the EPS or EPS derived products to be coated is not as important as the covering itself creates the fire protective barrier. However, it is clear that small spheres or granules covered individually with the layer by layer technology as described above will have an increased fire-protection as compared to bigger and bulkier EPS materials. Therefore, the invention in a further advantageous embodiment provides that the EPS material is in shape of balls, spheres or granules, having a mean diameter less than 5 mm, more preferred less than 3 mm and most preferred less than 2 mm.

A further method for manufacturing a fire protected expanded polystyrene (EPS) material or derived products, the method comprising:
a. introducing beads of styrene comprising pentane into a first reactor;
b. heating said beads to above 100° C;
c. introducing a bromine-free fire inhibiting agent or a bromine-free fire protecting agent into the reactor, where the compound constituting the fire protection agent comprises above 8% by weight of a composition comprising N- and P- components derived from an acid-base reaction, where said bromine-free fire inhibiting agent or a bromine-free fire protecting agent is in powder form, the particles of the powder having a mean average size of between 1 µm and 40 µm, preferably 5 µm to 25 µm, and most preferred 9 µm to 20 µm;
d. allowing the beads to expand integrating the bromine-free inhibiting agent or bromine-free fire protecting agent into the expanding styrene beads.

Particularly the combination of a bromine-free fire inhibiting agent or a bromine-free fire protecting agent introduced into the reaction vessel as a powder provides a method which does not affect the customary production cyclus of EPS. Furthermore the very fine powder is distributed substantially evenly on the surface of the ESP during the expansion process, thereby assuring a substantially homogeneous fire inhibiting or fire protecting effect.

The further advantageous method step wherein in step c. the bromine-free fire inhibiting agent or a bromine-free fire protecting agent is pulverized or ground into a powder having a mean average size of between 10 µm and 20 µm, after which the powder is suspended in a water-suspension, such that the water-suspension is oversaturated by powder; where the water-suspension thereafter is introduced into the reactor and the powdered bromine-free fire inhibiting agent or bromine-free fire protecting agent is encapsulated in the expanding polystyrene thereby forming the first layer.

Particularly by creating a saturated water/powder suspension it is achieved that the handling of the powder is manageable, and at the same time the traditional process of manufacturing EPS includes heating the polystyrene with steam, and as such supplementing the injected steam by steam containing powder, the process as such is substantially unaffected and at the same time the bromine-free fire inhibiting agent or a bromine-free fire protecting agent is introduced in the forming process of the EPS.

As already mentioned above, the invention is also directed to a layer by layer coated EPS or EPS derived material where the first coating is a bromine-free fire inhibiting agent or a bromine-free fire protecting agent and where the outer coating is a protective polymer layer. As is evident such a layer by layer construction is achieved by the methods described above.

The material used for the outer coating may in a further advantageous embodiment be selected between polylactid acid, shellac, chitosan, polystyrene-Sulfonat or polyvinylpyrrolidon.

Common for the various embodiments of the method described above is the fact that the fire inhibiting or protecting agent is embedded in a surface layer of the EPS object. How deep/thick this layer is depends on the production parameters during the formation of the EPS in the reactors, the powder size distribution, the saturation of the water/powder introduced into the reactor etc. However, the thickness of the layer is not as important as the cohesiveness and continuity of the powder particles on or near the surface of the EPS. For this purpose a surplus of suspension was added to the steam during exercising the invention with results showing that a substantially completely covering layer was established slightly embedded in the surface of the treated EPS objects, resulting in a successful fire inhibiting/protecting treatment.

Further advantageous embodiments of the invention are disclosed in further claims.

### Description of the Drawing

The invention will now be explained with reference to the accompanying drawings wherein
- Figure 1: illustrates schematically how a fluid bed process works
- Figure 2: illustrates a microscopic picture of a surface layer of a treated EPS particle
- Figure 3: illustrates a granule of EPS after having been treated to a first layer in the fluid bed device
- Figure 4: illustrates the same granule 3 having been exposed to the application of the second layer
- Figure 5: illustrates a cross-section of the granule 3 of figure 4 where it is easily seen that the EPS core 10 is covered by a thin layer 14
- Figure 6: illustrates schematically an innermost fire inhibiting agent layer 11 and an outer polymer coating layer 12
- Figure 7: illustrates IR spectra measured on EPS untreated and treated
- Figure 8: illustrates particle size distribution of powder used in the inventive method.

### Detailed Description of the Invention

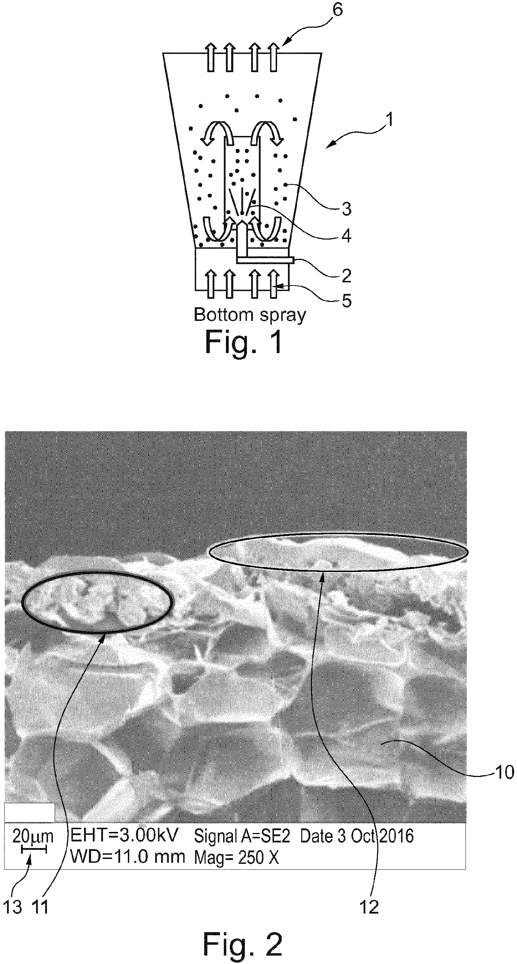

In figure 1 is illustrated schematically how a fluid bed process works. The fluid bed device 1 is provided with a spray device 2 such that the agent with which it is desirable to cover the object 3 may be introduced into the device 1 as a mist indicated by 4.

From the bottom of the device an airstream/flow 5 is directed upwards such that the particles 3 will be agitated by the airstream 5 and thereby circulate in the mist 4. They are "floating" in the upward airstream. Surplus air is evacuated at 6. By means of this principle the particles 3 will be introduced into the mist 4 and thereby be coated with the compound introduced through the spraying mechanism 2. In the case of the present invention using a layer by layer technology the particles are in a first fluid bed process exposed to the fire retardant/fire inhibiting agent and in a second fluid bed process exposed to a polymer coating in order to stabilize the layer construction.

Figure 2 illustrates a microscopic picture of a surface layer of a treated EPS particle. As indicated the large particles 10 is the expanded polystyrene material and the particulate layer highlighted in the circle 11 is the fire-retardant layer created by the acid-base reaction with a high content of N and P salts and finally the second layer comprising the polymer is illustrated by the circled 12. In this picture, taken of an actually treated granule according to the process described above the sizes are indicated by 13 such that as may be deducted by applying the measurement 13 to the layer thickness of the fire-inhibiting agent 11 this layer is approximately 15-20µm thick.

Turning to figures 3 and 4 the two layer covering is further illustrated. In figure 3 is illustrated a granule of EPS after having been treated to a first layer in the fluid bed device as schematically illustrated with reference to figure 1. The unevenness of the surface 11' is the fire inhibiting agent which is substantially evenly distributed across the entire surface of the granule 3.

In figure 4 is illustrated the same granule 3 having been exposed to the application of the second layer, i.e. the polymer covering layer where it is clearly detectable that the entire surface is substantially covered by the polymer layer 12 (see also the cross-section in figure 2).

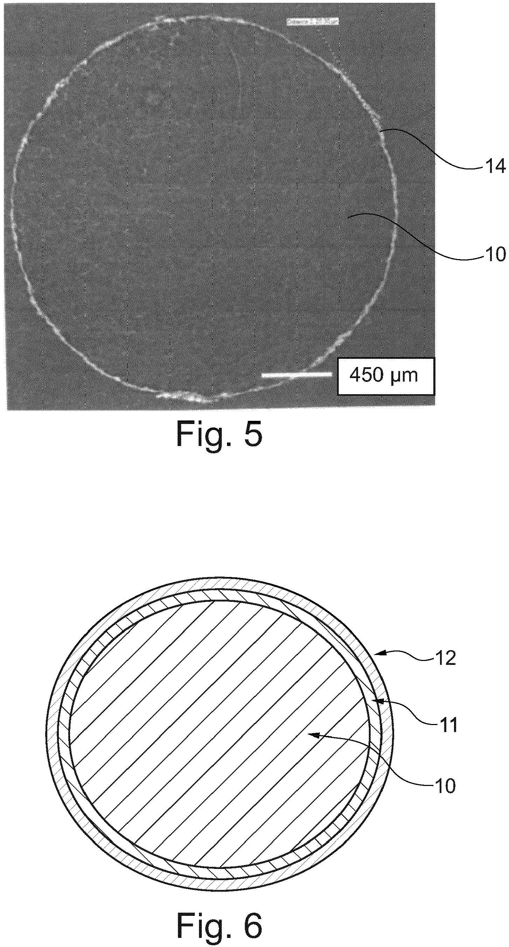

In figure 5 is illustrated a cross-section of the granule 3 of figure 4 where it is easily seen that the EPS core 10 is covered by a thin layer 14. This thin layer 14 comprises the two layers as discussed above with reference to figure 2, i.e. an innermost fire inhibiting agent layer 11 and an outer polymer coating layer 12. This is furthermore schematically illustrated in figure 6.

In this manner a very thorough covering layer-by-layer of each granule is achieved such that the overall finished object of expanded polystyrene is effectively treated with a bromine-free fire-inhibiting agent. Tests with the fire inhibiting characteristics applied as described above with reference to figures 1-6 clearly indicates that a significant fire-inhibiting effect is achieved and that the polymer coating layer ads to this fire-inhibiting effect such that a very effective overall treatment is achieved.

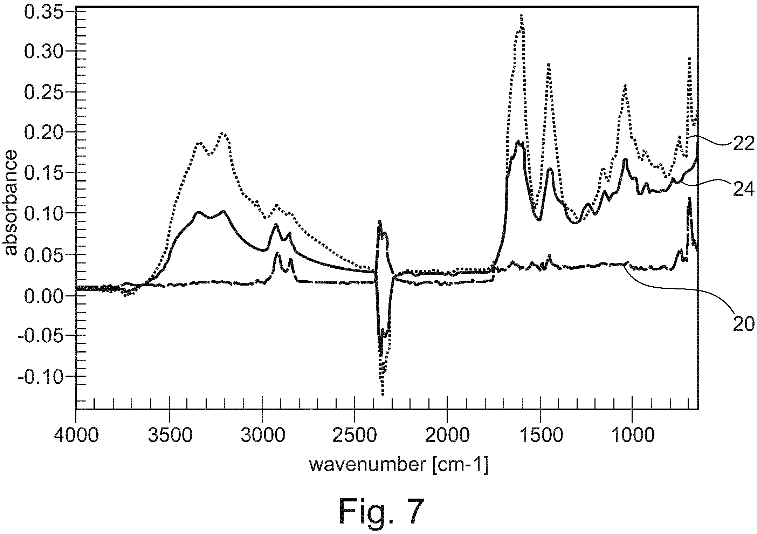

With reference to fig. 7 measurements of IR absorbance is depicted. The curve 20 is measurements for untreated EPS spheres. Curve 22 represents a similar measurement of a comparable EPS sphere provided with the first fire protecting layer, and the curve 24 represents the same EPS sphere further provided with the second protective layer. As is clearly indicated by the measurements there is a clear distinction between treated and untreated spheres. It is however more difficult to distinguish between spheres treated with one or two layers, but it is clear that the spheres treated according to the invention with a fire protecting layer, is distinct from untreated spheres. EPS was used for these tests but it is contemplated that any material treated with the present invention would show similar results. This is due to the fact that the layer by layer coating is applied outside the material and as such does not integrate, interface or in any other manner alter the material characteristics of the ball material, but only provides a very effective fire protecting layer/layers on the outside of the sphere.

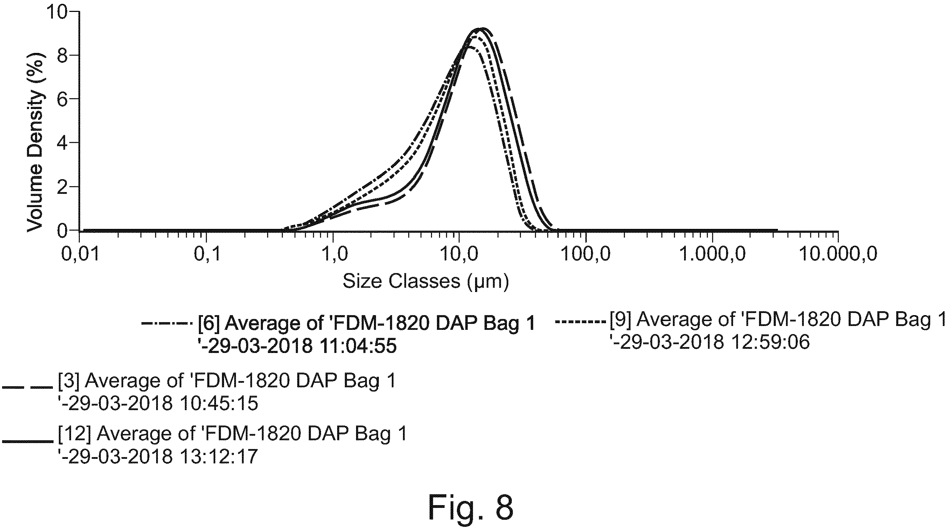

In fig. 8 is depicted the distribution of particles in the powder samples used in developing the present invention. The curves represent four different samples tested (due to black/white reproduction it is difficult to distinguish each curve). As it is clear from the particle distribution (particle size on horizontal axis) most particles had a mean size between 0.7 µm and 35 µm. The corresponding average surface area was calculated to approx. 831.5 m2/kg. When the EPS is coated with thin layers of the powderized bromine-free fire-inhibiting or protection agent it is clear that the very thin and yet almost completely covering layer as described with respect to fig. 2-5 is achieved.

## Claims

1. Method of fire protecting an expanded polystyrene (EPS) material or derived products, the method comprising providing the expanded polystyrene material with a content of a bromine-free fire inhibiting agent or a bromine-free fire protecting agent where the bromine-free fire inhibiting agent or a bromine-free fire protecting agent constitutes the fire protection layer, said layer comprises above 8 % by weight of a composition comprising N- and P- components derived from an acid-base reaction and where the bromine-free fire inhibiting agent or bromine-free fire protecting agent is added during the polystyrene expansion process as a finely ground powder having a particle size between 0.5 to 60 µm, preferably with a mean average size of between 10 and 20 µm.

2. Method according to claim 1 wherein a two layer structure is created by incorporating the bromine-free fire inhibiting agent or the bromine-free fire protecting agent layer into or onto the expanded polystyrene material, and thereafter applying a second layer comprising a protective polymer layer.

3. Method according to claim 1 wherein the expanded polystyrene material is coated in a fluid bed process, such that the expanded polystyrene objects to be coated are introduced into a fluid bed installation wherein first the material constituting the fire protecting layer is introduced into the fluidized bed installation coating the expanded polystyrene objects, and secondly the objects having a first layer is subjected to a second coating by a material comprising a binder forming a second layer, said second coating being performed in the same fluid bed installation or in a further fluid bed installation.

4. Method according to claim 1, wherein the expanded polystyrene material is introduced into and passed through a first bath containing the fire inhibiting agent or the fire protecting agent material in fluid form, whereafter the expanded polystyrene material having received a first coat of fire inhibiting agent is transferred to a second bath containing the material from which the protecting polymer layer is made from, such that as the objects have passed both baths a two layer structure is provided covering the expanded polystyrene material.

5. Method according to claim 1 wherein the material is spray coated in a two-step process, each step applying respectively the bromine-free fire inhibiting agent or a bromine-free fire protecting agent as a first layer onto or into the expanded polystyrene material and the protective polymer layer.

6. Method according to claim 1 wherein the two layer structure is applied in a coating process comprises a roller to roller technique, such that the material is provided with the fire inhibiting layer on a first set of rollers and the protective polymer layer on a second set of rollers.

7. Method according to claim 1 wherein the compound constituting the fire inhibiting or fire protecting agent layer comprises salts derived from an acid-base reaction having high contents of N and P, said N and P salts may be derived from one or more of the following: ammonia, hydrochloric acid, phosphoric acid, nitric acid.

8. Method according to claim 7, where the bromine-free fire inhibiting agent or a bromine-free fire protecting agent is in the shape of granules, and where each granule is provided with the second layer of protective polymer, and where the density of granules on the surface of the material to be fire protected is such that the granules covers a substantial portion of the surface of the material to be protected.

9. Method according to claim 1 where the thickness of the first layer is between 2 µm and 300 µm and where the thickness of the second layer is between 1 µm and 200µm.

10. Method according to claim 1 wherein glycerin is added to the fire protection compound.

11. Method for manufacturing a fire protected expanded polystyrene (EPS) material or derived products, the method comprising:
a. introducing beads of styrene comprising pentane into a first reactor;
b. heating said beads to above 100° C;
c. introducing a bromine-free fire inhibiting agent or a bromine-free fire protecting agent into the reactor, where the compound constituting the fire protection agent comprises above 8 % by weight of a composition comprising N- and P- components derived from an acid-base reaction, where said bromine-free fire inhibiting agent or a bromine-free fire protecting agent is in powder form, the particles of the powder having a mean average size of between 1 µm and 40 µm, preferably 5 µm to 25 µm, and most preferred 9 µm to 20 µm;
d. allowing the beads to expand integrating the bromine-free inhibiting agent or bromine-free fire protecting agent into the expanding styrene beads.

12. Method according to claim 11, wherein in step c the bromine-free fire inhibiting agent or a bromine-free fire protecting agent is pulverized or ground into a powder having a mean average size of between 10 µm and 20 µm, after which the powder is suspended in a water-suspension, such that the water-suspension is oversaturated by powder; where the water-suspension thereafter is introduced into the reactor and the powdered bromine-free fire inhibiting agent or bromine-free fire protecting agent is encapsulated in the expanding polystyrene thereby forming the first layer.

13. A layer by layer coated EPS or EPS derived material where the first coating is a bromine-free fire inhibiting agent or a bromine-free fire protecting agent and where the outer coating is a protective polymer layer.

14. A layer by layer coated material according to claim 13 wherein the material used for the outer coating may be selected between polylactid acid, shellac, chitosan, polystyrene-Sulfonat or polyvinylpyrrolidon.

15. A layer by layer coated material according to claim 13 wherein the EPS material is in the shape of balls, spheres, elongate fibres or granules, having a diameter less than 5 mm, more preferred less than 3 mm and most preferred less than 2 mm.
